Europäisches Patentamt

European Patent Office

Office européen des brevets

(11) Veröffentlichungsnummer: **0 682 974 A2**

## (12) EUROPÄISCHE PATENTANMELDUNG

(21) Anmeldenummer: **95200626.0**

(22) Anmeldetag: **16.03.95**

(51) Int. Cl.6: **B01D 53/86**

(30) Priorität: **19.05.94 DE 4417453**

(43) Veröffentlichungstag der Anmeldung:
**22.11.95 Patentblatt 95/47**

(84) Benannte Vertragsstaaten:
**AT BE CH DE DK ES FR GB GR IE IT LI LU NL PT SE**

(71) Anmelder: **METALLGESELLSCHAFT AG**
**Reuterweg 14**
**D-60323 Frankfurt am Main (DE)**

(72) Erfinder: **Weisweiler, Werner, Dr.**
**Goethering 107**
**D-75196 Remchingen-Singen (DE)**

(54) Verfahren zur Entstickung eines Abgases.

(57) Es wird ein Verfahren zur Entstickung eines Abgases beschrieben, bei dem das mit $NO_x$ verunreinigte sowie Sauerstoff und Wasserdampf enthaltende Abgas bei einer Reaktionstemperatur von 350 bis 500 °C in Gegenwart eines Eisensulfat enthaltenden Katalysators mit $NH_3$ oder mit einer bei 350 bis 500 °C $NH_3$-abgebenden Substanz in einem Reaktor in Kontakt gebracht wird, wobei das Mol-Verhältnis von $NO_x$ zu $NH_3$ zwischen 0,9 : 1 und 1,1 : 1 liegt. Das Verfahren ist dadurch gekennzeichnet, daß als Katalysator $FeSO_4$, $Fe_2(SO_4)_3$, $FeSO_4 \cdot xH_2O$ (x = 1, 4, 7) und/oder $Fe_2(SO_4)_3 \cdot 9H_2O$ verwendet wird, wobei der Katalysator entweder vor dem Eintrag in den Reaktor mit 1 bis 6 Mol $NH_3$ pro Mol Katalysator bei 20 bis 80 °C während 1 bis 10 s beladen oder vor dem Eintrag in den Reaktor mit der $NH_3$-abgebenden Substanz gemischt wird.

EP 0 682 974 A2

Die Erfindung bezieht sich auf ein Verfahren zur Entstickung eines Abgases, bei dem das mit $NO_x$ verunreinigte sowie Sauerstoff und Wasserdampf enthaltende Abgas bei einer Reaktionstemperatur von 350 bis 500°C in Gegenwart eines Eisensulfat enthaltenden Katalysators mit $NH_3$ oder mit einer bei 350 bis 500°C $NH_3$-abgebenden Substanz in einem Reaktor in Kontakt gebracht wird, wobei das Mol-Verhältnis von $NO_x$ zu $NH_3$ zwischen 0,9 : 1 und 1,1 : 1 liegt.

Viele Abgase, die bei chemischen Prozessen oder bei der Verbrennung fossiler Brennstoffe anfallen, enthalten neben anderen Schadstoffen auch die Oxide des Stickstoffs NO, $NO_2$ und $N_2O$, die mit der allgemeinen Formel $NO_x$ und dem in der Technik gebräuchlichen Begriff "Stickoxide" bezeichnet werden. Stickoxide sind gasförmige Schadstoffe, die als Umweltgifte wirken und daher aus den Abgasen entfernt werden müssen, bevor diese in die Atmosphäre entlassen werden. Die mit Stickoxiden verunreinigten Abgase enthalten je nach Herkunft zwischen 100 und 10000 mg $NO_x$ pro $Nm^3$, wobei das NO die Hauptmenge der Stickoxide bildet.

Aus der DE-OS 24 54 514 ist ein Verfahren zur Reduktion von Stickoxiden bekannt, bei dem man die Stickoxide mit einem Metallsulfatkatalysator in einer Atmosphäre, in der Ammoniak vorhanden ist, zusammenführt und bei dem als Metallsulfatkatalysator Kupfersulfat, Mangansulfat, Nickelsulfat, Eisensulfat, Kobaltsulfat, Zinksulfat oder Aluminiumsulfat oder Gemische dieser Stoffe verwendet wird. Bei diesem bekannten Verfahren ist ferner vorgesehen, daß man das Metallsulfat in einer Menge von 0,05 bis 20 Gew.-%, bezogen auf das Gewicht von Katalysator und Träger, verwendet und daß man das Ammoniak in der 0,67- bis 4-fachen stöchiometrischen Menge einsetzt. Die Entstickungsreaktion soll im Temperaturbereich von 350 bis 450°C ablaufen.

Aus der DE-OS 36 42 980 ist ein Verfahren zur katalytischen Reduktion von in einem Gas enthaltenen NO mit dem Reduktionsmittel $NH_3$ bekannt, bei dem das NO-haltige Gas mit $NH_3$ gemischt und die Mischung bei 185 bis 500°C sowie bei Normaldruck am Katalysator zur Reaktion gebracht wird, wobei der Katalysator aus einem sauren Träger sowie den katalytisch aktiven Substanzen $CuSO_4$, $MnSO_4$, $FeSO_4$ und/oder $Fe_2(SO_4)_3$ besteht, welche in einer Menge von 0,5 bis 20 Gew.-% auf dem Träger aufgebracht sind. Bei diesem bekannten Verfahren ist vorgesehen, daß der saure Träger aus $SiO_2$, Aluminiumsilikaten oder $\alpha$-$Al_2O_3$ besteht und daß dem NO-haltigen Gas $NH_3$ im Mol-Verhältnis NO zu $NH_3$ = 1 : 0,7 bis 1 : 1,3 zugesetzt wird.

Die DE-OS 41 25 004 offenbart ein Verfahren zur Entstickung der bei der Herstellung von Zement anfallenden Abgase, bei dem die mit Rohmehl beladenen Abgase bei 300 bis 450°C mit $NH_3$ in Gegenwart eines Katalysators zur Reaktion gebracht werden, wobei das $NH_3$ dem Abgas in einem Mol-Verhältnis $NH_3$ zu NO = 0,7 : 1 bis 1,5 : 1 zugegeben wird und bei dem als katalytisch aktive Substanz Eisensulfat oder eine Mischung aus Eisensulfat und Mangansulfat verwendet wird. Das Verfahren kann besonders vorteilhaft durchgeführt werden, wenn das Abgas bei 300 bis 450°C dem Vorwärmer entnommen, mit $NH_3$ gemischt und einem Zyklon- oder Wirbelschichtreaktor zugeführt wird, in dem sich ein Katalysator befindet, der aus einem Träger besteht, welcher mit der katalytisch aktiven Substanz dotiert ist, und daß das Abgas nach Verlassen des Zyklon- oder Wirbelschichtreaktors in den Vorwärmer zurückgeführt wird. Beim bekannten Verfahren hat sich alternativ als Katalysator kristallines Eisensulfat oder eine Mischung aus kristallinem Eisensulfat und kristallinem Mangansulfat bewährt, wobei der Katalysator eine Teilchengröße von 50 bis 500 $\mu$m hat.

Schließlich wurde in der deutschen Patentanmeldung P 43 13 479.3 ein Verfahren zur Entstickung der bei der Herstellung von Zement anfallenden Abgase vorgeschlagen, bei dem dem Abgas nach Verlassen des Drehrohrofens bei einer Temperatur von 750 bis 950°C Ammoniak zugegeben wird, wobei das Verhältnis $NO_x$ zu $NH_3$ gleich 1 : 0,8 bis 1 : 1 beträgt, und bei dem das Abgas bei einer Temperatur von 300 bis 450°C mit einem Katalysator in Kontakt gebracht wird, der als aktive Substanz Eisensulfat oder eine Mischung aus Eisensulfat und Mangansulfat enthält. Auch bei diesem Verfahren ist vorgesehen, daß als Katalysator kristallines Eisensulfat oder eine Mischung aus kristallinem Eisensulfat und kristallinem Mangansulfat verwendet wird, wobei der Katalysator eine Teilchengröße von 50 bis 500 $\mu$m hat und im Abgasstrom vor dem obersten Zyklon des Vorwärmers in einer Menge von 0,1 bis 3 $g/Nm^3$ verteilt wird.

Bei der Durchführung der bekannten Verfahren hat sich gezeigt, daß in einigen Fällen im entstickten Abgas noch $NH_3$ vorhanden ist, das bereits in sehr geringen Mengen zu Geruchsbelästigungen führt und daher möglichst quantitativ aus dem Abgas entfernt werden muß. Dieser sogenannte Ammoniak-Schlupf muß bereits bei der Entstickungsreaktion vermieden werden, denn eine nachträgliche Entfernung des $NH_3$ aus dem Abgas würde das Entstickungsverfahren mit zu hohen Kosten belasten.

Der Erfindung liegt daher die Aufgabe zugrunde, ein Entstickungsverfahren der eingangs genannten Art zu schaffen, das es ermöglicht, $NH_3$ in möglichst nahstöchiometrischer Menge, bezogen auf $NO_x$, zur Durchführung der Entstickungsreaktion zu verwenden, um den Ammoniak-Schlupf zu minimieren.

Die der Erfindung zugrundeliegende Aufgabe wird dadurch gelöst, daß als Katalysator $FeSO_4$, $Fe_2(SO_4)_3$, $FeSO_4 \cdot xH_2O$ (x = 1, 4, 7) und/oder $Fe_3(SO_4)_2 \cdot 9H_2O$ verwendet wird, wobei der Katalysator entweder vor dem Eintrag in den Reaktor mit 1 bis 6 Mol $NH_3$ pro Mol Katalysator bei 20 bis 80 °C während 1 bis 10 s beladen oder vor dem Eintrag in den Reaktor mit der $NH_3$-abgebenden Substanz gemischt wird. Es hat sich gezeigt, daß kristallines kristallwasserfreies oder kristallwasserhaltiges $FeSO_4$ oder $Fe_3(SO_4)_2$ bis zu 6 Mol $NH_3$ aufnimmt, wenn es mit $NH_3$ bei 20 bis 80 °C in Kontakt gebracht wird. Diese Reaktion, die für kristallwasserfreies $FeSO_4$ in Gmelins Handbuch der anorganischen Chemie, Eisen, Teil B, 1932, S. 434/435, beschrieben ist, kann auch mit kristallwasserhaltigem $FeSO_4$, kristallwasserfreiem $Fe_2(SO_4)_3$ oder kristallwasserhaltigem $Fe_2(SO_4)_3$ realisiert werden, wobei pro Mol $FeSO_4$ vorzugsweise 1, 4 und 7 Mol $H_2O$ und pro Mol $Fe_2(SO_4)_3$ 9 Mol $H_2O$ gebunden sind. In überraschender Weise wurde gefunden, daß das in einer Menge von 1 bis 6 Mol komplex gebundene $NH_3$ bei 350 bis 500 °C in situ sehr schnell abgegeben wird, daher in sehr reaktiver Form vorliegt und mithin eine nahstöchiometrische Umsetzung des $NH_3$ mit $NO_x$ ermöglicht. Das $NH_3$ kann also auf dem erfindungsgemäßen Weg sehr viel gezielter als bisher zur Entstickung verwendet werden. In analoger Weise wurde ferner gefunden, daß auch ein Gemisch, welches aus dem Katalysator und einer $NH_3$-abgebenden Substanz besteht sowie vor dem Eintrag in den Entstickungsreaktor hergestellt wird, ein gezieltes Einbringen des $NH_3$ in die Entstickungsreaktion und damit eine nahstöchiometrische Umsetzung mit $NO_x$ ermöglicht. Auch bei Schwankungen des $NO_x$-Gehalts der zu entstickenden Abgase wurde bei der Durchführung des erfindungsgemäßen Verfahrens kein Ammoniak-Schlupf beobachtet, denn die Geruchsprobe der entstickten Abgase war in bezug auf $NH_3$ negativ.

In weiterer Ausgestaltung der Erfindung ist vorgesehen, daß die Reaktionstemperatur 400 bis 450 °C beträgt. In diesem Temperaturbereich konnte mit dem erfindungsgemäßen Verfahren eine Entstickungsleistung > 90 % sicher eingehalten werden.

Nach der Erfindung hat es sich als besonders vorteilhaft erwiesen, wenn als Reaktor ein Flugstromreaktor, ein Wirbelschichtreaktor oder ein System einer zirkulierenden Wirbelschicht verwendet wird. Im Flugstromreaktor sollten die eingetragenen Feststoffteilchen einen mittleren Teilchendurchmesser $d_{50}$ von 10 bis 50 μm haben. Im Wirbelschichtreaktor sind Feststoffteilchen mit einem mittleren Teilchendurchmesser von 50 bis 500 μm zu verwenden. Im System der zirkulierenden Wirbelschicht ist für die eingetragenen Feststoffteilchen ein mittlerer Teilchendurchmesser $d_{50}$ von 20 bis 200 μm zu wählen. Die Gasgeschwindigkeit beträgt im Wirbelschichtreaktor 0,5 bis 3 m/s, im System der zirkulierenden Wirbelschicht 3 bis 8 m/s, vorzugsweise 4 bis 5 m/s, und im Flugstromreaktor 6 bis 20 m/s. Die zirkulierende Wirbelschicht ist als Zirkulationssystem gestaltet, das aus einem Reaktor, einem Feststoff-Abscheider und einer Feststoff-Rückführleitung besteht. Die zirkulierende Wirbelschicht zeichnet sich dadurch aus, daß - im Unterschied zur klassischen Wirbelschicht, bei der eine dichte Phase durch einen deutlichen Dichtesprung von dem darüber befindlichen Gasraum getrennt ist - Verteilungszustände ohne definierte Grenzschicht vorliegen. Ein Dichtesprung zwischen dichter Phase und darüber befindlichem Gasraum ist bei einer zirkulierenden Wirbelschicht nicht existent; jedoch nimmt innerhalb des Reaktors die Feststoffkonzentration von unten nach oben ständig ab. Die Betriebsbedingungen einer zirkulierenden Wirbelschicht sind bekanntlich über die Kennzahlen von Froude und Archimedes bestimmt.

Nach der Erfindung wird als $NH_3$-abgebende Substanz Harnstoff, Ammoniumhydrogencarbonat, Ammoniumcarbonat oder Ammoniumoxalat verwendet. Diese Substanzen zerfallen insbesondere in Gegenwart des im Abgas enthaltenen Wasserdampfes bei 350 bis 500 °C unter Bildung von $NH_3$, wobei die Zerfallsgeschwindigkeit so hoch ist, daß ständig genügend $NH_3$ für die Entstickungsreaktion zur Verfügung steht.

Nach der Erfindung ist vorgesehen, daß die Beladung des Katalysators in einer Wirbelschicht oder im System einer zirkulierenden Wirbelschicht erfolgt, wobei als Wirbelgas abgekühltes, entsticktes Abgas oder Luft verwendet wird, die 0,1 bis 3 Vol.-% $NH_3$ enthalten. Unter diesen Bedingungen kann eine hinreichend große Menge $NH_3$ an den Katalysator angelagert werden, so daß pro Mol Katalysator auf jeden Fall 3 bis 4 Mol $NH_3$ gebunden werden.

Das erfindungsgemäße Verfahren kann besonders kostengünstig durchgeführt werden, wenn die Kontaktzeit des $NO_x$-haltigen Abgases mit dem $NH_3$-haltigen Katalysator oder dem aus dem Katalysator und der $NH_3$-abgebenden Substanz bestehenden Gemisch im Reaktor 1 bis 0,05 s beträgt.

Entsprechend der Erfindung wird das Verfahren zur Entstickung von Abgasen der Zementherstellung verwendet. Die Abgase der zementherstellung enthalten ca. 1000 bis 2000 mg $NO_x/Nm^3$ Abgas, und mit dem erfindungsgemäßen Verfahren wird eine Entstickungsleistung > 85 % erreicht.

Der Gegenstand der Erfindung wird nachfolgend anhand der Zeichnung sowie eines Ausführungsbeispiels näher erläutert.

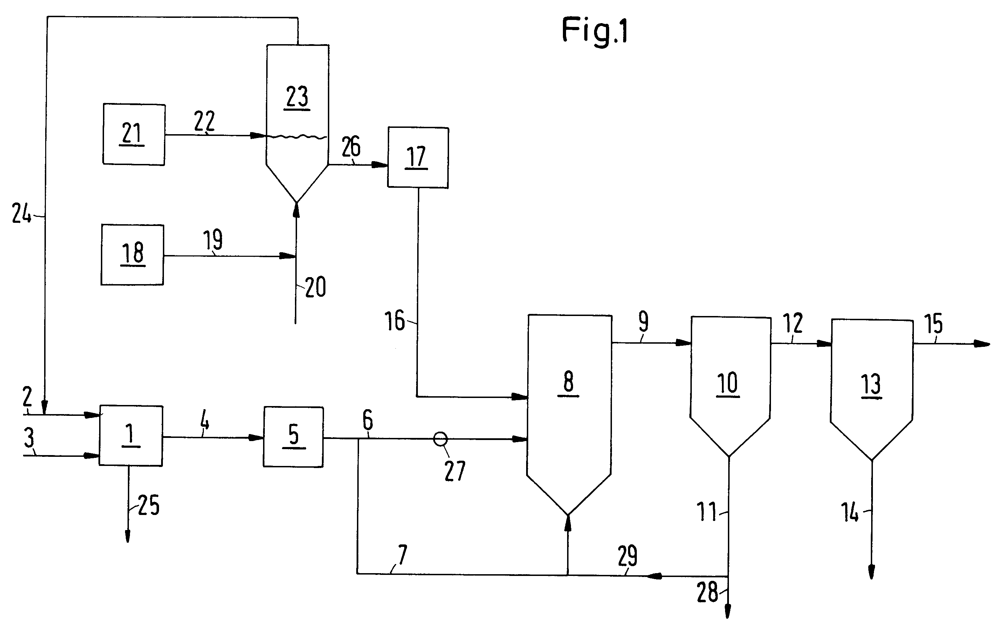

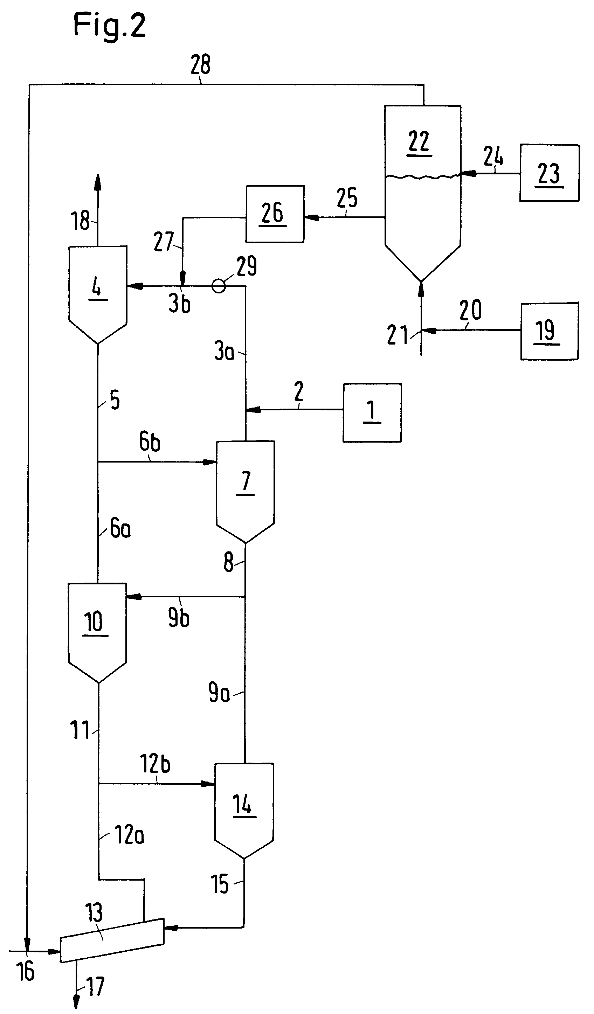

Fig. 1 zeigt die Entstickung eines Abgases eines Verbrennungsprozesses und Fig. 2 die Entstickung eines Abgases der Zementherstellung.

Fig. 1 zeigt die Anwendung des erfindungsgemäßen Verfahrens zur Entstickung von Abgasen, die bei der Energiegewinnung durch Verbrennung von Kohle anfallen. Dem Kessel (1) wird über die Leitung (3) Kohle zugeführt, die mit der über die Leitung (2) eingebrachten Luft verbrannt wird. Der Verbrennungsprozeß wird mit einem Luftüberschuß durchgeführt, so daß im Verbrennungsabgas ca. 3 bis 8 Vol.-% Sauerstoff enthalten sind. Bei der Verbrennung von Kohle im Kessel (1) werden neben den Verbrennungsprodukten $CO_2$ und $H_2O$ auch die gasförmigen Schadstoffe $SO_2$ und $NO_x$ gebildet. Das Wasser liegt im Verbrennungsabgas als Wasserdampf vor. $NO_x$ ist im Verbrennungsabgas in einer Menge von 250 mg pro $Nm^3$, berechnet als NO, vorhanden. Tatsächlich liegt das $NO_x$ im Verbrennungsabgas zu 90 % als NO und zu 10 % als $NO_2$ vor. Das Verbrennungsabgas enthält außerdem staubförmige Flugasche. Im oberen Teil des Kessels (1) wird dem Verbrennungsabgas bereits ein Teil der Verbrennungswärme durch Wärmeaustauscherflächen entzogen, die in der Zeichnung nicht dargestellt sind. Die bei der Verbrennung entstehende Asche wird aus dem Kessel (1) über die Leitung (25) abgeführt. Das mit $SO_2$, Flugstaub und $NO_x$ verunreinigte Verbrennungsabgas wird aus dem Kessel (1) über die Leitung (4) in den Wärmeaustauscher (5) geführt, wo eine Abkühlung auf ca. 450 °C erfolgt. Die dem Wärmeaustauscher (5) entnommene Verbrennungswärme wird zur Energiegewinnung verwendet. Das Verbrennungsabgas gelangt über die Leitung (6) in ein System mit zirkulierender Wirbelschicht, welches aus dem Reaktor (8), dem Abscheider (10) und der Rückführleitung (11) besteht.

Dem Wirbelschichtreaktor (23) wird aus dem Vorratsbunker (21) über die Leitung (22) $FeSO_4 \cdot 7H_2O$ zugeführt, das einen mittleren Teilchendurchmesser $d_{50}$ von 50 $\mu$m hat. Dem Wirbelschichtreaktor (23) wird über die Leitung (20) Luft zugeführt, der aus dem Vorratstank (18) über die Leitung (19) $NH_3$ in einer Menge von 1 Vol.-% zugemischt wird. Die als Wirbelgas verwendete $NH_3$-haltige Luft erzeugt im Wirbelschichtreaktor (23) eine "klassische" Wirbelschicht und hat eine Gasgeschwindigkeit von ca. 1 m/s. Der Wirbelschichtreaktor (23) wird bei einer Temperatur von 70 °C betrieben, und das $FeSO_4 \cdot 7H_2O$ hat im Wirbelschichtreaktor (23) eine mittlere Verweilzeit von ca. 8 s. Ein Teilstrom des $FeSO_4 \cdot 7H_2O$, das im Wirbelschichtreaktor (23) pro Mol 4 Mol $NH_3$ aufgenommen hat, wird über die Leitung (26) in den Vorratsbehälter (17) gefördert. Das den Wirbelschichtreaktor (23) verlassende Wirbelgas wird der in der Leitung (2) geführten Verbrennungsluft über die Leitung (24) zugemischt. Anstelle der als Wirbelgas verwendeten Luft kann auch ein Teilstrom des entstickten, abgekühlten Abgases verwendet werden, dessen $O_2$-Gehalt nur 3 bis 8 Vol.-% beträgt.

An der in der Leitung (6) angeordneten Meßstelle (27) wird der $NO_x$-Gehalt des Verbrennungsabgases kontinuierlich gemessen. In Abhängigkeit des $NO_x$-Gehalts wird dem Reaktor (8) über die Leitung (16) der mit $NH_3$ beladene Katalysator zugeführt. Der Katalysatoreintrag erfolgt unmittelbar oberhalb der Einmündung der Abgasleitung (6) in den Reaktor (8). Pro $Nm^3$ Abgas werden dem Reaktor folgende Katalysator- und $NH_3$-Mengen zugeführt:

200 mg $NO_x$ pro $Nm^3$ Abgas = 416 mg $FeSO_4 \cdot 7H_2O \cdot 4NH_3$
250 mg $NO_x$ pro $Nm^3$ Abgas = 521 mg $FeSO_4 \cdot 7H_2O \cdot 4NH_3$
300 mg $NO_x$ pro $Nm^3$ Abgas = 625 mg $FeSO_4 \cdot 7H_2O \cdot 4NH_3$

Dies entspricht einem Mol-Verhältnis $NO_x : NH_3$ = 1 : 1,05. Der im Reaktor enthaltene Feststoff (Staub und Katalysator) wird mit dem Abgas zum überwiegenden Teil über die Leitung (9) in den als Zyklon gestalteten Abscheider (10) geführt, wo eine Gas-Feststoff-Trennung erfolgt. Der im Zyklon (10) abgeschiedene Feststoff wird über die Leitung (11) entnommen, wobei ein Teilstrom über die Leitung (28) ausgetragen und ein zweiter Teilstrom über die Leitung (29) in den Reaktor (8) zurückgeführt wird. Der rückgeführte Feststoff wird mit dem in der Leitung (7) geführten Teilstrom des Abgases fluidisiert. Im Reaktor (8) gibt der mit $NH_3$ beladene Katalysator das $NH_3$ sehr schnell ab und reduziert das $NO_x$ zu Stickstoff. Nicht verbrauchtes $NH_3$ wird von dem im Abgas enthaltenen Sauerstoff zu Stickstoff oxidiert. Der Reaktor (8) wird oberhalb der Einmündung der Abgasleitung (6) mit einer Gasgeschwindigkeit von 5 m/s betrieben. Das Abgas hat im Reaktor eine durchschnittliche Verweilzeit (Reaktionszeit) von 0,1 bis 0,2 s. Durch die teilweise Kreislaufführung des Feststoffs wird der $NH_3$-Gehalt des Katalysators nahezu quantitativ für die Entstickungsreaktion genutzt.

Das entstickte Abgas verläßt den Abscheider (10) über die Leitung (12) und gelangt in das Elektrofilter (13), wo die noch im Abgas vorhandenen Feststoffteilchen (Flugstaub und Katalysator) zu ca. 90 % abgeschieden und über die Leitung (14) aus dem Elektrofilter (13) entnommen werden. Im Abscheider (10) und in der Leitung (12) können Wärmeaustauscherflächen angeordnet werden, um die optimale Entstaubungstemperatur einzustellen. Das entstaubte Abgas verläßt den Elektrofilter (13) über die Leitung (15) mit einem $NO_x$-Gehalt von < 30 mg/$Nm^3$, was einer Entstickungsleistung von 85 bis 90 % entspricht. Das in der Leitung (15) geführ-

te Abgas enthält kein NH$_3$.

Aus dem in der Leitung (15) geführten, entstickten Abgas wird anschließend das SO$_2$ mit einem bekannten Verfahren abgetrennt. Die in den Leitungen (14) und (28) geführten Feststoffe können entweder gesondert deponiert oder mit der in der Leitung (25) geführten Asche vereinigt und anschließend deponiert werden.

Fig. 2 zeigt die Anwendung des erfindungsgemäßen Verfahrens zur Entstickung von Abgasen, die bei der Zementherstellung anfallen. Die Herstellung des Zements umfaßt das Gewinnen und Aufbereiten der Rohstoffe, das Brennen des Rohstoffgemisches zu Zementklinker, das Herstellen der Zumahlstoffe sowie das gemeinsame Vermahlen des Klinkers und ggf. eines oder mehrerer Zumahlstoffe mit Calciumsulfat als Erstarrungsregler. Die Rohstoffe (Kalkstein und Ton) werden trocken aufgemahlen und liefern das Rohmehl. Das Rohmehl wird während des Mahlvorgangs durch ein heißes Gas getrocknet, danach aufgewärmt und anschließend zu Zementklinker gebrannt. Je nach Bauart des Brennofens wird das Rohmehl während ca. 1 bis 2 h auf die Brenntemperatur von 1450°C aufgewärmt und verbleibt ca. 10 bis 20 min bei dieser Temperatur.

Anschließend wird der Zementklinker möglichst schnell abgekühlt. Im Brennofen bilden sich bei den hohen Temperaturen der Brennflamme in erheblicher Menge Oxide des Stickstoffs, vorzugsweise NO, die aus den Abgasen entfernt werden müssen.

Aus der Mahlanlage (1), zu der auch eine Homogenisierungs- und eine Trocknungseinrichtung gehören, wird das Zementrohmehl über die Leitung (2) in die Leitung (3a) des aus mehreren Zyklonen bestehenden Vorwärmers eingebracht. Das Rohmehl wird im Abgasstrom suspendiert, der in der Leitung (3a) fließt, und gelangt über die Leitung (3b) in den Zyklon (4), wo eine Abtrennung der Feststoffpartikel erfolgt. Die Feststoffpartikel gelangen über die Leitung (5) in die Leitung (6a), wo sie erneut im Abgasstrom suspendiert werden, der in der Leitung (6a) fließt. Die Suspension gelangt dann über die Leitung (6b) in den Zyklon (7), wo eine abermalige Trennung der Feststoffteilchen erfolgt, die über die Leitung (8) in die Leitung (9a) gelangen, wo sie erneut im Abgasstrom suspendiert werden. Das Abgas aus dem Zyklon (7) gelangt in die Leitung (3a). Aus der Leitung (9a) tritt die Feststoffsuspension über die Leitung (9b) in den Zyklon (10) ein, wo sie in ihre Bestandteile getrennt wird. Während das Abgas über die Leitung (6a) abfließt, werden die Feststoffteilchen über die Leitung (11) der Leitung (12a) zugeführt, in der sie im Abgasstrom suspendiert werden, der aus dem als Drehrohrofen gestalteten Brennofen (13) in die Leitung (12a) gelangt. Die Feststoffsuspension tritt über die Leitung (12b) in den Zyklon (14) ein, wo die Trennung der Feststoffsuspension erfolgt. Während das Abgas über die Leitung (9a) abfließt, gelangen die im Zyklon (14) abgeschiedenen Feststoffe über die Leitung (15) in den Brennofen (13), wo sie langsam der Flamme entgegenfließen, die durch den Brenner (16) erzeugt wird. Der Zementklinker wird aus dem als Drehrohrofen gestalteten Brennofen (13) über die Leitung (17) entnommen. Das Zementrohmehl hat in der Leitung (15) in der Regel eine Temperatur von 800 bis 900°C, während in der Leitung (12a) eine Abgastemperatur von ca. 1100 bis 1200°C herrscht. Auf dem Weg durch die einzelnen Zyklone des Vorwärmers kühlt sich das Abgas ab, und die Wärmeenergie wird vom Zementrohmehl aufgenommen. Das Abgas tritt in die Leitung (3a) mit einer Temperatur von ca. 500 bis 600°C ein und kühlt sich in der Leitung (3b) sowie im Zyklon (4) auf eine Temperatur von 350 bis 450°C ab. Aus dem Zyklon (4) tritt das Abgas zur Feinentstaubung über die Leitung (18) in ein Elektrofilter ein, das in der Zeichnung nicht dargestellt ist.

Aus dem Vorratsbunker (23) wird kristallwasserfreies FeSO$_4$, das einen mittleren Teilchendurchmesser $d_{50}$ von 50 μm hat, über die Leitung (24) in den Wirbelschichtreaktor (22) eingebracht. Das im Wirbelschichtreaktor (22) befindliche FeSO$_4$ wird mit Luft fluidisiert, die in den Wirbelschichtreaktor (22) über die Leitung (21) mit einer Gasgeschwindigkeit von 1 m/s eingebracht wird. Der als Wirbelgas verwendeten Luft wird aus dem Vorratstank (19) über die Leitung (20) 1 Vol.-% NH$_3$ zugemischt. Anstelle von Luft kann abgekühltes, gereinigtes Abgas als Wirbelgas verwendet werden. Das FeSO$_4$ hat im Wirbelschichtreaktor (22) eine durchschnittliche Verweilzeit von 8 s. Der Wirbelschichtreaktor (22) wird bei einer Temperatur von 50 bis 60°C betrieben, wobei das FeSO$_4$ 6 Mol NH$_3$ bindet. Aus dem Wirbelschichtreaktor (22) wird der mit NH$_3$ beladene Katalysator über die Leitung (25) in die Dosiereinrichtung (26) gefördert und gelangt anschließend über die Leitung (27) in die Leitung (3b). Der Eintrag des mit NH$_3$ beladenen Katalysators erfolgt an einer Stelle, wo die Temperatur etwa 420°C beträgt. Das in den Leitungen (3a) und (3b) geführte Abgas hat einen durchschnittlichen NO$_x$-Gehalt von 1000 mg pro Nm$^3$ Abgas, berechnet als NO. Im Abgas sind außerdem ca. 750 g Zementrohmehl pro Nm$^3$ Abgas suspendiert. An der Meßstelle (29) wird der NO$_x$-Gehalt des Abgases kontinuierlich ermittelt, und die zugeführte Menge des mit NH$_3$ beladenen Katalysators wird entsprechend der NO$_x$-Konzentration geregelt. Über die Leitung (27) werden der in der Leitung (3b) geführten Gas-Feststoffsuspension folgende Katalysator- und NH$_3$-Mengen zugeführt:

900 mg NO pro $Nm^3$ Abgas = 1330 mg $FeSO_4$ • 6 $NH_3$

1000 mg NO pro $Nm^3$ Abgas = 1480 mg $FeSO_4$ • 6 $NH_3$

1100 mg NO pro $Nm^3$ Abgas = 1630 mg $FeSO_4$ • 6 $NH_3$

Dies entspricht einem Mol-Verhältnis $NO_x$ zu $NH_3$ = 1 : 1,05. In der Leitung (3b) und im Zyklon (4) wird das $NH_3$ sehr schnell abgespalten und reduziert das vorhandene $NO_x$ zu Stickstoff, wobei der Entstickungsgrad > 90 % ist. Das in der Leitung (18) geführte Abgas hat einen $NO_x$-Gehalt, berechnet als NO, < 100 mg pro $Nm^3$; Ammoniak konnte im entstickten Abgas nicht nachgewiesen werden. Das aus dem Wirbelschichtreaktor (22) austretende Wirbelgas wird über die Leitung (28) in den Brenner (16) geführt und dort als Verbrennungsluft genutzt.

Nach der Erfindung ist es möglich, das $NH_3$ in Form von $NH_3$-abgebenden Substanzen in den Entstickungsreaktor in der Weise einzubringen, daß eine $NH_3$-abgebende Substanz mit dem Katalysator vor Eintritt in den Reaktor gemischt wird. Als $NH_3$-abgebende Substanz hat sich insbesondere Harnstoff bewährt. Zur Entstickung von 1 $Nm^3$ Abgas der Zementherstellung mit einem $NO_x$-Gehalt von 1000 mg pro $Nm^3$ kann in die Leitung (3b) ein Gemisch aus 1 g kristallwasserfreiem $FeSO_4$ und 1,05 g Harnstoff eingebracht werden. Auch mit dieser Arbeitsweise wird ein Entstickungsgrad > 90 % erreicht.

Die katalytische Reduktion der Stickoxide wird durch die Gegenwart des Rohmehlstaubs nicht beeinträchtigt, so daß eine Entstaubung des Abgases vor der Entstickung nicht erforderlich ist. Die benötigte Menge des Katalysators ist so gering, daß er im Zementrohmehl bleiben kann, ohne daß es zu Störungen der Zementqualität kommt, zumal eine bestimmte Menge Eisenoxid im Zementklinker vorhanden sein muß.

## Patentansprüche

1. Verfahren zur Entstickung eines Abgases, bei dem das mit $NO_x$ verunreinigte sowie Sauerstoff und Wasserdampf enthaltende Abgas bei einer Reaktionstemperatur von 350 bis 500°C in Gegenwart eines Eisensulfat enthaltenden Katalysators mit $NH_3$ oder mit einer bei 350 bis 500°C $NH_3$-abgebenden Substanz in einem Reaktor in Kontakt gebracht wird, wobei das Mol-Verhältnis von $NO_x$ zu $NH_3$ zwischen 0,9 : 1 und 1,1 : 1 liegt, dadurch gekennzeichnet, daß als Katalysator $FeSO_4$, $Fe_2(SO_4)_3$, $FeSO_4 • xH_2O$ (x = 1, 4, 7) und/oder $Fe_2(SO_4)_3 • 9H_2O$ verwendet wird, wobei der Katalysator entweder vor dem Eintrag in den Reaktor mit 1 bis 6 Mol $NH_3$ pro Mol Katalysator bei 20 bis 80°C während 1 bis 10 s beladen oder vor dem Eintrag in den Reaktor mit der $NH_3$-abgebenden Substanz gemischt wird.

2. Verfahren nach Anspruch 1, dadurch gekennzeichnet, daß die Reaktionstemperatur 400 bis 450°C beträgt.

3. Verfahren nach den Ansprüchen 1 bis 2, dadurch gekennzeichnet, daß als Reaktor ein Flugstromreaktor, ein Wirbelschichtreaktor oder ein System einer zirkulierenden Wirbelschicht verwendet wird.

4. Verfahren nach den Ansprüchen 1 bis 3, dadurch gekennzeichnet, daß als $NH_3$-abgebende Substanz Harnstoff, Ammoniumhydrogencarbonat, Ammoniumcarbonat oder Ammoniumoxalat verwendet wird.

5. Verfahren nach den Ansprüchen 1 bis 3, dadurch gekennzeichnet, daß die Beladung des Katalysators in einer Wirbelschicht oder im System einer zirkulierenden Wirbelschicht erfolgt, wobei als Wirbelgas abgekühltes, entsticktes Abgas oder Luft verwendet wird, die 0,1 bis 3 Vol.-% $NH_3$ enthalten.

6. Verfahren nach den Ansprüchen 1 bis 5, dadurch gekennzeichnet, daß die Kontaktzeit des $NO_x$-haltigen Abgases mit dem $NH_3$-haltigen Katalysator oder dem aus dem Katalysator und der $NH_3$-abgebenden Substanz bestehenden Gemisch im Reaktor 1 bis 0,05 s beträgt.

7. Verwendung des Verfahrens nach den Ansprüchen 1 bis 6 zur Entstickung von Abgasen der Zementherstellung.

Fig.1

EP 0 682 974 A2

EP 0 682 974 A2

# Fig.2

8